# EUROPEAN PATENT APPLICATION

(11) **EP 3 939 923 A2**
(43) Date of publication of application: **19.01.2022**
(21) Application number: 21185800.6
(22) Date of filing: 15.07.2021
(51) Int. Cl.: B66B 1/34, B66B 13/14

(54) **METHOD AND SYSTEM FOR CONTROLLING ELEVATOR FOR BOARDING OF ROBOT**

(30) Priority: 15.07.2020 KR 20200087340
(71) Applicant: Naver Labs Corporation, Seongnam-si, Gyeonggi-do 13638 (KR)
(72) Inventor: KIM, Seoktae, 13638 Seongnam-si (KR); KIM, Kahyeon, 13638 Seongnam-si (KR)
(74) Representative: V.O.

(57) **Abstract**

An elevator control system (130) has control over a door of an elevator (120) and, thus, directly controls opening and closing of the door of an elevator (120) which a robot (100) is to board or alight from based on state information of the robot (100) received from a robot control system (140).

## Description

### BACKGROUND OF THE INVENTION

### Field of Invention

One or more example embodiments of the following description relate to technology for controlling an elevator for boarding of a robot.

### Description of Related Art

An autonomous driving robot refers to a robot that searches around the surroundings, senses obstacles, and finds an optimal path to a destination using wheels or legs, and is developed and used in various fields, such as, for example, autonomous driving vehicles, logistics, hotel services, and robot vacuum cleaners.

A robot used to provide a service in a building may need to board an elevator installed in the building to provide a service on a specific floor of the building. However, when an elevator is simply called and used by a robot or a robot control system that controls the robot, situations, such as a crowded elevator or other events which may prevent the robot from boarding the elevator, may frequently occur, which makes it difficult for the robot to effectively provide a service.

Accordingly, there is a need for a method and system for controlling an elevator for boarding of a robot that enables a robot to further efficiently provide a service.

Korean Patent Laid-Open Publication No. 10-2005-0024840 describes technology related to a path planning method for an autonomous mobile robot and also describes a method of planning an optimal path through which a mobile robot autonomously moving in a home or an office may move safely and quickly to a target point while avoiding obstacles.

The aforementioned information is simply provided to help in understanding the background of the invention, may not include contents that do not form a part of the related art, and may not include what the related art may present to those skilled in the art.

### BRIEF SUMMARY OF THE INVENTION

One or more example embodiments provide a method and system that enables an elevator control system to maintain control over opening or closing a door of an elevator when a robot boards or alights from the elevator.

One or more example embodiments provide a method and system that may secure a boarding space of a robot by adjusting a full capacity (a fullness handling standard) of an elevator when a robot boards the elevator.

According to an aspect of at least one example embodiment, there is provided an elevator control method performed by a computer-implemented elevator control system including at least one processor configured to execute computer-readable instructions included in a memory, the elevator control method including, by the at least one processor, receiving state information of a robot from the robot or a robot control system; and controlling a door of an elevator which the robot is to board or alight from based on the state information.

The controlling of the door of the elevator may include maintaining a door open state of the elevator for boarding of the robot when the elevator arrives at a calling floor of the robot and the door of the elevator opens; and transmitting a door close instruction to the elevator in response to receiving state information according to a boarding completion of the robot.

The controlling of the door of the elevator may include maintaining a door open state of the elevator for alighting of the robot when the elevator arrives at a target floor of the robot and the door of the elevator opens; and transmitting a door close instruction to the elevator in response to receiving state information according to an alight completion of the robot.

The controlling of the door of the elevator may include controlling a door open state of the elevator to be maintained for a preset period of time in response to boarding or alighting of the robot.

The controlling of the door of the elevator may further include additionally extending the door open state of the elevator when boarding or alighting of the robot is not completed within the desired period of time.

The elevator control method may further include, by the at least one processor, adjusting a full capacity of the elevator into consideration of a boarding space of the robot for the elevator.

The elevator control method may further include, by the at least one processor, adjusting a full capacity that represents a standard for handling the fullness of the elevator, based on at least one of a number of robots aboard or planned to board the elevator, a required area, and a purpose of movement.

The elevator control method may further include, by the at least one processor, controlling state information of the robot associated with the elevator to be displayed through at least one of an internal user interface and an external user interface of the elevator.

The controlling of the state information of the robot may include controlling information about a floor from which the robot is planned to board and a floor on which the robot is to alight through the internal user interface.

The controlling of the state information of the robot may include controlling information about a fullness state by boarding or planned boarding of the robot to be displayed through the internal user interface.

The elevator control method may further include, by the at least one processor, receiving a call from the robot control system; assigning an elevator to be called to a floor indicated by the call; and controlling the assigned elevator to move to the floor indicated by the call.

The assigning may include selecting an elevator that guarantees an available area of the robot as the elevator to be called based on a congestion level according to an internal boarding situation of each elevator.

The assigning may include selecting, from among a plurality of elevators, an elevator set as a dedicated elevator for boarding of the robot as the elevator to be called.

An indicator that indicates a robot-only elevator may be displayed on at least one of an internal user interface and an external user interface of an elevator set as the dedicated elevator and not providing information about whether the elevator is ascending or descending and a planned stopping of the elevator, inactivating a floor selection button and a door close button of the elevator, and adjusting a lighting in the elevator may be applied thereto.

The elevator control method may further include, by the at least one processor, receiving a cancellation for the assigned elevator from the robot or the robot control system; assigning another elevator to be called to the floor indicated by the call; and controlling the other elevator to move to the floor indicated by the call.

According to an aspect of at least one example embodiment, there is provided a non-transitory computer-readable record medium storing instructions that, when executed by a processor, cause the processor to perform the elevator control method.

According to an aspect of at least one example embodiment, there is provided a computer-implemented elevator control system including at least one processor configured to execute computer-readable instructions included in a memory. The at least one processor is configured to receive state information of a robot from the robot or a robot control system, and to control a door of an elevator which the robot is to board or alight from based on the state information.

According to some example embodiments, safety and efficiency for elevator use may be promoted in such a manner that an elevator control system may maintain control over opening and closing a door of an elevator when a robot boards or alights from the elevator.

According to some example embodiments, safety and efficiency for elevator use may be promoted by securing a boarding space of a robot through adjustment of a full capacity of an elevator when the robot boards the elevator and by minimizing a number of persons to board the elevator used by the robot.

Further areas of applicability will become apparent from the description provided herein. The description and specific examples in this summary are intended for purposes of illustration only and are not intended to limit the scope of the present disclosure.

### BRIEF DESCRIPTION OF THE DRAWINGS

Example embodiments will be described in more detail with regard to the figures, wherein like reference numerals refer to like parts throughout the various figures unless otherwise specified, and wherein:
FIG. 1 illustrates an example of an elevator control environment for boarding of a robot according to an example embodiment;
FIG. 2 illustrates a block diagram of a robot configured to provide a service in a building according to an example embodiment;
FIG. 3 illustrates a block diagram of a system configured to control an elevator for boarding of a robot according to an example embodiment;
FIG. 4 illustrates a block diagram of a robot control system configured to control a robot that provides a service in a building according to an example embodiment;
FIG. 5 is a flowchart illustrating an example of a method of controlling an elevator for boarding of a robot according to an example embodiment;
FIG. 6 is a flowchart illustrating an example of a method of re-calling an elevator depending on whether a robot may board a called elevator according to an example embodiment;
FIG. 7 is a flowchart illustrating an example of a method of re-calling an elevator depending on whether a waiting space of an elevator to be called is congested according to an example embodiment;
FIG. 8 is a flowchart illustrating an example of a method of setting an elevator to a call able/disable state depending on whether a robot may board an elevator to be called according to an example embodiment;
FIG. 9 is a flowchart illustrating an example of a method of calling an elevator for boarding of a corresponding robot using a control system that controls a robot and controlling boarding of the robot according to an example embodiment;
FIG. 10 is an illustration in which a plurality of robots boards or alights from an elevator according to an example embodiment;
FIG. 11 illustrates an example of an external user interface of an elevator according to an example embodiment;
FIG. 12 illustrates an example of an internal user interface of an elevator according to an example embodiment; and
FIGS. 13 to 19 illustrate examples of an operation of a robot control system, a robot, an elevator, and an elevator control system from a point in time at which a robot calls an elevator to a point in time at which the robot alights from the elevator according to an example embodiment.

It should be noted that these figures are intended to illustrate the general characteristics of methods and/or structure utilized in certain example embodiments and to supplement the written description provided below. These drawings are not, however, to scale and may not precisely reflect the precise structural or performance characteristics of any given embodiment, and should not be interpreted as defining or limiting the range of values or properties encompassed by example embodiments.

### DETAILED DESCRIPTION OF THE INVENTION

One or more example embodiments will be described in detail with reference to the accompanying drawings. Example embodiments, however, may be embodied in various different forms, and should not be construed as being limited to only the illustrated embodiments. Rather, the illustrated embodiments are provided as examples so that this disclosure will be thorough and complete, and will fully convey the concepts of this disclosure to those skilled in the art. Accordingly, known processes, elements, and techniques, may not be described with respect to some example embodiments. Unless otherwise noted, like reference characters denote like elements throughout the attached drawings and written description, and thus descriptions will not be repeated.

Although the terms "first," "second," "third," etc., may be used herein to describe various elements, components, regions, layers, and/or sections, these elements, components, regions, layers, and/or sections, should not be limited by these terms. These terms are only used to distinguish one element, component, region, layer, or section, from another region, layer, or section. Thus, a first element, component, region, layer, or section, discussed below may be termed a second element, component, region, layer, or section, without departing from the scope of this disclosure.

Spatially relative terms, such as "beneath," "below," "lower," "under," "above," "upper," and the like, may be used herein for ease of description to describe one element or feature's relationship to another element(s) or feature s) as illustrated in the figures. It will be understood that the spatially relative terms are intended to encompass different orientations of the device in use or operation in addition to the orientation depicted in the figures. For example, if the device in the figures is turned over, elements described as "below," "beneath," or "under," other elements or features would then be oriented "above" the other elements or features. Thus, the example terms "below" and "under" may encompass both an orientation of above and below. The device may be otherwise oriented (rotated 90 degrees or at other orientations) and the spatially relative descriptors used herein interpreted accordingly. In addition, when an element is referred to as being "between" two elements, the element may be the only element between the two elements, or one or more other intervening elements may be present.

As used herein, the singular forms "a," "an," and "the," are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups, thereof. As used herein, the term "and/or" includes any and all combinations of one or more of the associated listed products. Expressions such as "at least one of," when preceding a list of elements, modify the entire list of elements and do not modify the individual elements of the list. Also, the term "exemplary" is intended to refer to an example or illustration.

When an element is referred to as being "on," "connected to," "coupled to," or "adjacent to," another element, the element may be directly on, connected to, coupled to, or adjacent to, the other element, or one or more other intervening elements may be present. In contrast, when an element is referred to as being "directly on," "directly connected to," "directly coupled to," or "immediately adjacent to," another element there are no intervening elements present.

Unless otherwise defined, all terms (including technical and scientific terms) used herein have the same meaning as commonly understood by one of ordinary skill in the art to which example embodiments belong. Terms, such as those defined in commonly used dictionaries, should be interpreted as having a meaning that is consistent with their meaning in the context of the relevant art and/or this disclosure, and should not be interpreted in an idealized or overly formal sense unless expressly so defined herein.

Example embodiments may be described with reference to acts and symbolic representations of operations (e.g., in the form of flow charts, flow diagrams, data flow diagrams, structure diagrams, block diagrams, etc.) that may be implemented in conjunction with units and/or devices discussed in more detail below. Although discussed in a particular manner, a function or operation specified in a specific block may be performed differently from the flow specified in a flowchart, flow diagram, etc. For example, functions or operations illustrated as being performed serially in two consecutive blocks may actually be performed simultaneously, or in some cases be performed in reverse order.

Units and/or devices according to one or more example embodiments may be implemented using hardware and/or a combination of hardware and software. For example, hardware devices may be implemented using processing circuitry such as, but not limited to, a processor, Central Processing Unit (CPU), a controller, an arithmetic logic unit (ALU), a digital signal processor, a microcomputer, a field programmable gate array (FPGA), a System-on-Chip (SoC), a programmable logic unit, a microprocessor, or any other device capable of responding to and executing instructions in a defined manner.

Software may include a computer program, program code, instructions, or some combination thereof, for independently or collectively instructing or configuring a hardware device to operate as desired. The computer program and/or program code may include program or computer-readable instructions, software components, software modules, data files, data structures, and/or the like, capable of being implemented by one or more hardware devices, such as one or more of the hardware devices mentioned above. Examples of program code include both machine code produced by a compiler and higher level program code that is executed using an interpreter.

For example, when a hardware device is a computer processing device (e.g., a processor), Central Processing Unit (CPU), a controller, an arithmetic logic unit (ALU), a digital signal processor, a microcomputer, a microprocessor, etc., the computer processing device may be configured to carry out program code by performing arithmetical, logical, and input/output operations, according to the program code. Once the program code is loaded into a computer processing device, the computer processing device may be programmed to perform the program code, thereby transforming the computer processing device into a special purpose computer processing device. In a more specific example, when the program code is loaded into a processor, the processor becomes programmed to perform the program code and operations corresponding thereto, thereby transforming the processor into a special purpose processor.

Software and/or data may be embodied permanently or temporarily in any type of machine, component, physical or virtual equipment, or computer storage medium or device, capable of providing instructions or data to, or being interpreted by, a hardware device. The software also may be distributed over network coupled computer systems so that the software is stored and executed in a distributed fashion. In particular, for example, software and data may be stored by one or more computer readable storage mediums, including the tangible or non-transitory computer-readable storage media discussed herein.

According to one or more example embodiments, computer processing devices may be described as including various functional units that perform various operations and/or functions to increase the clarity of the description. However, computer processing devices are not intended to be limited to these functional units. For example, in one or more example embodiments, the various operations and/or functions of the functional units may be performed by other ones of the functional units. Further, the computer processing devices may perform the operations and/or functions of the various functional units without sub-dividing the operations and/or functions of the computer processing units into these various functional units.

Units and/or devices according to one or more example embodiments may also include one or more storage devices. The one or more storage devices may be tangible or non-transitory computer-readable storage media, such as random access memory (RAM), read only memory (ROM), a permanent mass storage device (such as a disk drive), solid state (e.g., NAND flash) device, and/or any other like data storage mechanism capable of storing and recording data. The one or more storage devices may be configured to store computer programs, program code, instructions, or some combination thereof, for one or more operating systems and/or for implementing the example embodiments described herein. The computer programs, program code, instructions, or some combination thereof, may also be loaded from a separate computer readable storage medium into the one or more storage devices and/or one or more computer processing devices using a drive mechanism. Such separate computer readable storage medium may include a Universal Serial Bus (USB) flash drive, a memory stick, a Blue-ray/DVD/CD-ROM drive, a memory card, and/or other like computer readable storage media. The computer programs, program code, instructions, or some combination thereof, may be loaded into the one or more storage devices and/or the one or more computer processing devices from a remote data storage device via a network interface, rather than via a local computer readable storage medium. Additionally, the computer programs, program code, instructions, or some combination thereof, may be loaded into the one or more storage devices and/or the one or more processors from a remote computing system that is configured to transfer and/or distribute the computer programs, program code, instructions, or some combination thereof, over a network. The remote computing system may transfer and/or distribute the computer programs, program code, instructions, or some combination thereof, via a wired interface, an air interface, and/or any other like medium.

The one or more hardware devices, the one or more storage devices, and/or the computer programs, program code, instructions, or some combination thereof, may be specially designed and constructed for the purposes of the example embodiments, or they may be known devices that are altered and/or modified for the purposes of example embodiments.

A hardware device, such as a computer processing device, may run an operating system (OS) and one or more software applications that run on the OS. The computer processing device also may access, store, manipulate, process, and create data in response to execution of the software. For simplicity, one or more example embodiments may be exemplified as one computer processing device; however, one skilled in the art will appreciate that a hardware device may include multiple processing elements and multiple types of processing elements. For example, a hardware device may include multiple processors or a processor and a controller. In addition, other processing configurations are possible, such as parallel processors.

Although described with reference to specific examples and drawings, modifications, additions and substitutions of example embodiments may be variously made according to the description by those of ordinary skill in the art. For example, the described techniques may be performed in an order different with that of the methods described, and/or components such as the described system, architecture, devices, circuit, and the like, may be connected or combined to be different from the above-described methods, or results may be appropriately achieved by other components or equivalents.

Hereinafter, example embodiments will be described with reference to the accompanying drawings.

The example embodiments may configure an optimal elevator interactive environment for a vertical movement of a robot in a building and may control an elevator operation by disallowing a person to board or allowing a small number of persons to board an elevator used by the robot for safety and efficiency.

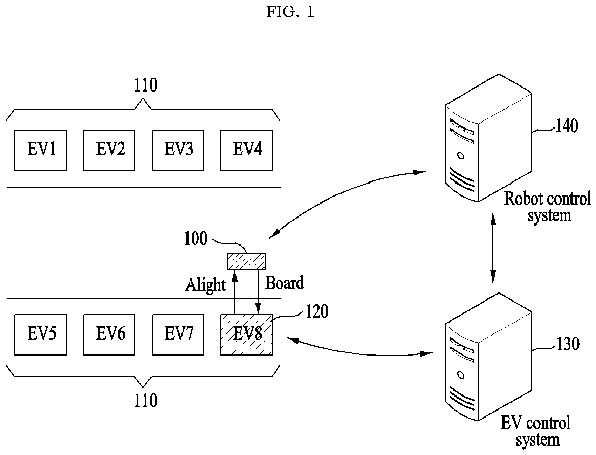

FIG. 1 illustrates an example of an elevator control environment for boarding of a robot according to an example embodiment.

FIG. 1 illustrates elevators EV1, EV2, EV3, EV4, EV5, EV6, EV7, and EV8 (EV1 to EV8) installed in a building. Each of elevators (EV1 to EV8) 110 may be a device for moving between floors in the building and may enable a user (person) or a robot 100 to board and move between floors in the building. Each of the elevators 110 may be configured to be available by all of a general user and the robot 100.

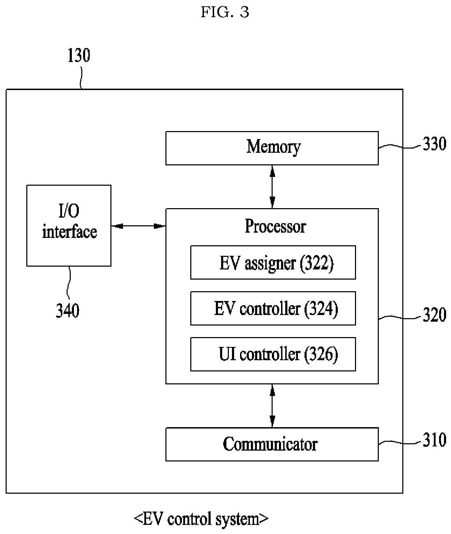

Each of the elevators 110 may be called and controlled to move by an elevator control system 130. For example, the elevator control system 130 may select an appropriate elevator in response to a call from a user or a robot control system 140 that controls the robot 100 and may move the selected elevator to a called position. A structure of the elevator control system 130 is further described with reference to FIG. 3.

In the example of FIG. 1, an elevator (EV8) 120 may be an elevator that is called to be boarded by the robot 100 in response to a call from the robot 100 or the robot control system 140 that controls the robot 100. Alternatively, the elevator 120 may be set as a dedicated elevator for boarding of the robot 100.

The robot 100 may be a service robot used to provide a service in the building. The robot 100 may be configured to provide a service on at least one floor. Also, when a plurality of robots 100 is present, each of the plurality of robots 100 may be configured to provide a service on at least one floor. That is, the robot 100 may be configured to provide a service on one or more floors based on a type/providing frequency of the service and/or a form/structure of the building (floor). The plurality of robots 100 may be configured to provide services on a single floor.

The service provided from the robot 100 may include, for example, a delivery service, an order-based beverage (coffee, etc.) delivery service, a cleaning service, and other information/content providing services.

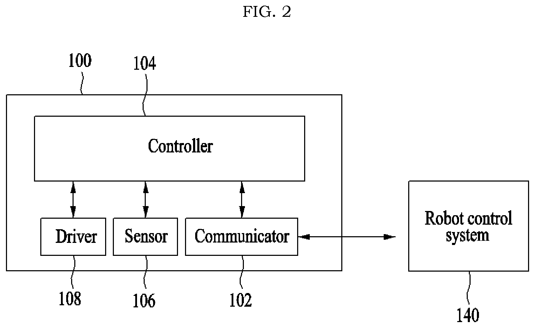

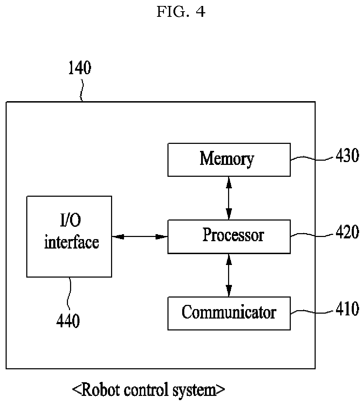

Movement and service providing of the robot 100 and at least a portion of calling the elevator 120 may be performed through the robot control system 140. For example, in response to a call from the robot control system 140, the elevator control system 130 may move the appropriate elevator 120 to a floor on which the robot 100 is present. A structure of the robot 100 and a structure of the robot control system 140 are further described with reference to FIGS. 2 and 4.

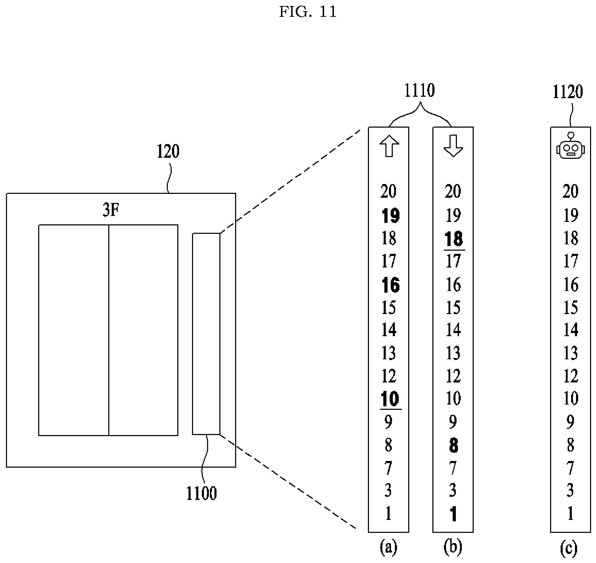

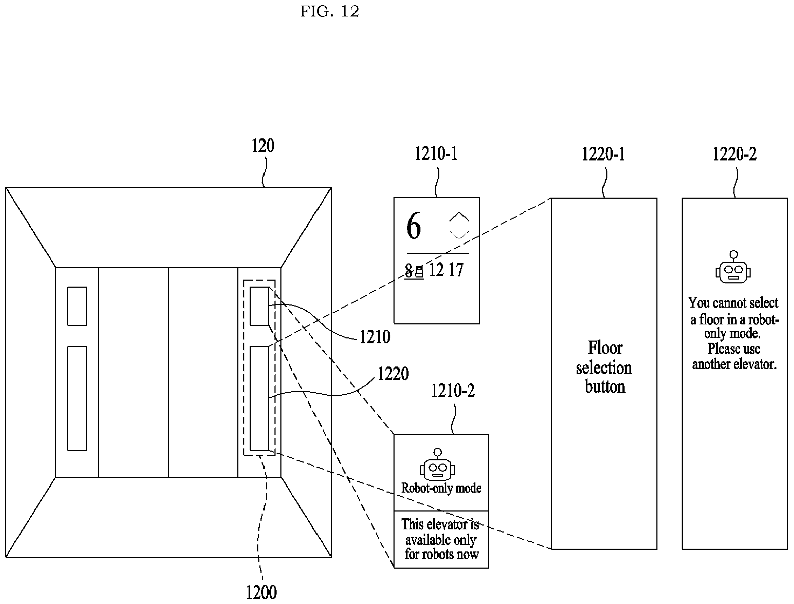

The elevator control system 130 may sense boarding of at least one robot 100 in the elevator 120 and may control the elevator 120 to move to a floor on which the robot 100 is to provide a service. The elevator control system 130 may configure at least one of an internal user interface of the elevator 120 and an external user interface of the elevator 120 to display whether the robot 100 is using the elevator 120. The internal user interface may be provided inside the elevator 120 and may include, for example, an internal display and floor selection buttons of the elevator 120. The internal user interface is further described with reference to FIG. 12. The external user interface may be provided adjacent to one or both of the external doors of the elevator 120 and include, for example, an external display and call buttons for calling the elevator 120. The external user interface is further described with reference to FIG. 11.

In an example embodiment, at least one of the internal user interface and the external user interface of the elevator 120 may be configured to display whether the robot 100 is using the elevator 120 such that a user (person) desiring to use the elevator 120 may verify whether the robot 100 has boarded the elevator 120 or whether the elevator 120 is set as a robot-only elevator.

Therefore, according to example embodiments, a user may refrain from using an elevator being used by a robot or a dedicated robot-only elevator, and interference between the robot and the user may be minimized in terms of elevator use.

FIG. 2 illustrates an example of a robot configured to provide a service in a building according to an example embodiment.

As described above, the robot 100 may be a service robot that is used to provide a service in a building. The robot 100 may provide the service to a user in the building at a predetermined (alternatively, desired) position, for example, on a specific floor, of the building through autonomous driving.

Referring to FIG. 2, the robot 100 may be a physical device and may include a controller 104, a driver 108, a sensor 106, and a communicator 102.

Although not illustrated, the controller 104 may be a physical processor embedded in the robot 100 and may include a path planning processing module, a mapping processing module, a driving control module, a localization processing module, a data processing module, and a service processing module. Here, the path planning processing module, the mapping processing module, the driving control module, and the localization processing module may be selectively included in the controller 104 depending on example embodiments to enable indoor autonomous driving of the robot 100 regardless of a failure in communication with the robot control system 140.

The communicator 102 may be a component for the robot 100 to communicate with another device, for example, another robot or the robot control system 140. That is, the communicator 102 may be a hardware module, such as, for example, an antenna, a data bus, a network interface card, a network interface chip, and a networking interface port of the robot 100, and a software module, such as, for example, a network device driver and a networking program, configured to transmit/receive data and/or information to/from another device.

The driver 108 may include equipment for controlling and enabling movement of the robot 100 as a component configured to control and enable the movement of the robot 100.

The sensor 106 may be a component configured to collect required data for autonomous driving and service providing of the robot 100. The sensor 106 may not include expensive sensing equipment and may simply include, for example, a low-cost ultrasonic sensor and/or a low-cost camera.

For example, the data processing module of the controller 104 may transmit sensing data including output values of sub-sensors of the sensor 106 to the robot control system 140 through the communicator 102. The robot control system 140 may transmit path data generated using an indoor map of the building to the robot 100. The path data may be transmitted to the data processing module through the communicator 102. The data processing module may immediately transmit the path data to the driving control module and the driving control module may control the driver 108 based on the path data and may control indoor autonomous driving of the robot 100.

When the robot 100 is incommunicable with the robot control system 140, the data processing module may transmit sensing data to the localization processing module and may generate path data through the path planning processing module and the mapping processing module and may directly process indoor autonomous driving of the robot 100.

The robot 100 may be distinguished from a mapping robot used to generate the indoor map of the building. Here, since the robot 100 does not include high-cost sensing equipment, the robot 100 may process indoor autonomous driving using an output vale of, for example, a low-cost ultrasonic sensor and/or a low-cost camera. Meanwhile, if the robot 100 has processed indoor autonomous driving in communication with the robot control system 140, the robot 100 may use mapping data included in the existing path data received from the robot control system 140and may enable further precise indoor autonomous driving using low-cost sensors.

The service processing module may receive an instruction received through the robot control system 140 through the communicator 102 or through the communicator 102 and the data processing module. The driver 108 may further include equipment for movement of the robot 100 and equipment related to the service provided from the robot 100. For example, to perform a food/delivery item delivery service, the driver 108 of the robot 100 may include a component configured to load food/delivery item or a component (e.g., a robot arm) configured to deliver food/delivery item to a user. Also, the robot 100 may further include a speaker and/or display configured to provide information/content. The service processing module may transfer a driving instruction for a service to be provided to the driving control module. In response to the driving instruction, the driving control module may control a component included in the robot 100 or the driver 108 such that the service may be provided.

The robot 100 may sense the called elevator 120 under control of the robot control system 140 and may board the called elevator 120. When the elevator 120 arrives at a floor on which the robot 100 is to provide the service, the robot 100 may alight from the elevator 120 and may provide the service on the corresponding floor.

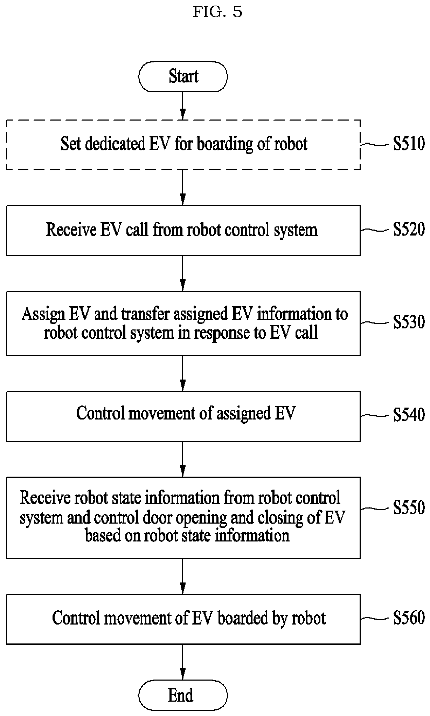

The elevator control system 130 and the robot control system 140 that control the elevator 120 for boarding of the robot 100 are further described with reference to FIGS. 3 and 5, respectively.

Description related to technical features made above with reference to FIG. 1 may also apply to FIG. 2 and repeated description is omitted.

FIG. 3 illustrates an example of a system configured to control an elevator for boarding of a robot according to an example embodiment.

The elevator control system 130 may be a device configured to control a call for the elevators 110 and movement of the elevators 110 in the building. The elevator control system 130 may include at least one computing device and may be configured as a server present inside the building or outside the building.

Referring to FIG. 3, the elevator control system 130 may include a memory 330, a processor 320, a communicator 310, and an input/output (I/O) interface 340.

The memory 330 may include a permanent mass storage device, such as random access memory (RAM), read only memory (ROM), and a disk drive as a non-transitory computer-readable record medium. Here, the ROM and the permanent mass storage device may be separated from the memory 330 and may be included as a separate permanent storage device. Also, an operating system (OS) and at least one program code may be stored in the memory 330. Such software components may be loaded from a computer-readable storage medium separate from the memory 330. The separate computer-readable storage medium may include a non-transitory computer-readable record medium, such as a floppy drive, a disk, a tape, a DVD/CD-ROM drive, and a memory card. According to other example embodiments, software components may be loaded to the memory 330 through the communicator 310 instead of, or in addition to, the non-transitory computer-readable record medium.

The processor 320 may be configured to process computer-readable instructions of a computer program by performing basic arithmetic operations, logic operations, and I/O operations. The computer-readable instructions may be provided from the memory 330 or the communicator 310 to the processor 320. For example, the processor 320 may be configured to execute received instructions in response to the program code loaded to the memory 330. Referring to FIG. 3, the processor 320 may include an elevator (EV) assigner 322, an EV controller 324, and a user interface (UI) controller 326.

Each of the components, for example, the EV assigner 322, the EV controller 324, and the UI controller 326, of the processor 320 may be a software module and/or a hardware module as a portion of the processor 320 and may represent a function (functional block) implemented by the processor 320. The EV assigner 322 may assign the elevator 120 for boarding of the robot 100 in response to a call from the robot control system 140. Here, at a specific time or in a specific situation, the EV assigner 322 may assign a robot-only elevator and may assign the elevator 120 capable of guaranteeing an available area for the robot 100 based on the congestion level in the corresponding elevator 120. The EV controller 324 may control the elevator 120 to move to a floor on which the robot 100 is to provide a service. In particular, the elevator control system 130 has control over opening and closing the door of the elevator 120 and may control door opening and closing of the elevator 120 taking into consideration of the state of the robot 100 when the robot 100 boards or alights from the elevator 120. The EV controller 324 may secure a boarding space for the robot 100 by adjusting the full capacity of the elevator 120 based on boarding or planned boarding of the robot 100. The UI controller 326 may configure at least one of the internal user interface and the external user interface of the elevator 120 to display the state of the robot 100 associated with use or nonuse of the elevator 120.

The communicator 310 may be a component for the elevator control system 130 to communicate with another device, for example, the elevators 110 or the robot control system 140. That is, the communicator 310 may be a hardware module, such as, for example, an antenna, a data bus, a network interface card, a network interface chip, and a networking interface port of the elevator control system 130, and a software module, such as, for example, a network device driver and a networking program, configured to transmit/receive data and/or information to/from another device.

The I/O interface 340 may be a device for interface with an input device, such as, for example, a keyboard and a mouse, and an output device, such as, for example, a display and a speaker.

Also, according to other example embodiments, the elevator control system 130 may include a number of components greater than or less than the number of components shown in FIG. 3.

A method of controlling the elevator 120 for boarding of the robot 100, performed by the components, for example, the EV assigner 322, the EV controller 324, and the UI controller 326, of the processor 320 is further described below with reference to FIGS. 5 to 19.

Descriptions related to technical features made above with reference to FIGS. 1 and 2 may apply to FIG. 3 and repeated description is omitted.

FIG. 4 illustrates an example of a robot control system configured to control a robot that provides a service in a building according to an example embodiment.

The robot control system 140 may be a device configured to control movements of the robot 100 and service providing of the robot 100 in a building, which is described above. The robot control system 140 may control the movements of each of a plurality of robots 100 and the services provided by the robots. The robot control system 140 may call the elevator 120 for moving the robot 100 to a floor on which the robot 100 is to provide a service, in communication with the elevator control system 130. The robot control system 140 may control the robot 100 to recognize the called elevator 120 and to board the elevator 120, and may control the robot 100 to alight from the elevator 120 on the floor on which the robot 100 is to provide the service.

The robot control system 140 may include at least one computing device and may be configured as a server present inside or outside the building. The robot control system 140 may be implemented as a cloud server (system).

Referring to FIG. 4, the robot control system 140 may include a memory 430, a processor 420, a communicator 410, and an I/O interface 440. Descriptions related to general technical features of the components, for example, the communicator 310, the processor 320, the memory 330, and the I/O interface 340, of the elevator control system 130 may apply to that of the components, for example, the communicator 410, the processor 420, and the memory 430 of the robot control system 140 of FIG. 4, and repeated description is omitted.

Description related to technical features made above with reference to FIGS. 1 to 3 may apply to FIG. 4 and repeated description is omitted.

In the following description, an operation performed by components of the robot 100, the elevator control system 130, or the robot control system 140 may be described as an operation performed by the robot 100, the elevator control system 130, or the robot control system 140, for clarity of description.

FIG. 5 is a flowchart illustrating an example of a method of controlling an elevator for boarding of a robot according to an example embodiment.

Hereinafter, an elevator control method for calling the elevator 120 in response to an elevator call from the robot control system 140, performed by the elevator control system 130, allowing the robot 100 to board the called elevator 120, and moving the elevator 120 to a floor on which the robot 100 is to provide a service is described with reference to FIG. 5.

Referring to FIG. 5, in operation S510, the elevator control system 130 may assign at least one elevator, for example, the elevator 120, among the plurality of elevators 110 present in a building as a dedicated elevator for boarding of the robot 100. For example, the elevator control system 130 may set one of the elevators 110 as a dedicated elevator for boarding of the robot 100 during a predetermined (or, alternatively, desired) time section. The time section may be a time zone in which users in the building relatively less frequently use the elevators 110 during daily routines. The time section may be between 2 P.M. and 4 P.M. The time section may be preset by an administrator of the elevator control system 130. For example, the elevator 120 of FIG. 1 may be the dedicated elevator. In the case of moving a plurality of robots 100 at a time, the movement efficiency may be improved using the dedicated elevator, for example, a robot-only elevator.

The UI controller 326 may configure at least one of an external user interface and an internal user interface of the elevator 120 set as the dedicated elevator to display that the elevator 120 is set as the dedicated elevator for boarding of the robot 100. For example, an image of the robot 100 may be displayed on a display corresponding to the external user interface of the elevator 120.

A method of configuring, by the UI controller 326, the internal user interface and/or the external user interface of the elevator 120 may be performed when the elevator 120 is set as the dedicated elevator regardless of whether the robot 100 is actually aboard the elevator 120. Alternatively, the method of configuring the internal user interface and/or the external user interface of the elevator 120 may be performed when the robot 100 is aboard the elevator 120 or when the elevator 120 is called by the robot control system 140, although the elevator 120 is not set as the dedicated elevator.

When a general user (person) calls the elevator 120, the robot-only elevator may be excluded from a target to be called. When a person is aboard the dedicated elevator, it is possible to induce the person to alight from the dedicated elevator by disallowing the person to select a floor using the internal user interface of the elevator 120.

The dedicated elevator may be simply preferred and recommended for use of the robot 100 (for the external user interface and/or the internal user interface) and may not completely exclude use by a general user.

In operation S520, the elevator control system 130 may receive a call for the elevator 120 from the robot control system 140. The call may include robot identification information (e.g., a robot ID) for identifying the robot 100 and information about the current floor on which the robot 100 is present and a target floor to which the robot is to move, such as a floor on which the robot 100 is to provide a service. Depending on example embodiments, the call may further include information about an area required by the robot 100 by including an area physically occupied by the robot 100 as a space required in the elevator 120. Depending on example embodiments, the call may be directly transmitted from the robot 100 to the elevator control system 130. Also, the call may further include at least one of estimated time information about a time at which the robot 100 is to arrive at a waiting space for the elevator 120 (elevator room) and information about whether quickness is required (e.g., quickness may be required if the robot 100 is on a delivery and otherwise, quickness may not be required).

In operation S530, in response to the call received from the robot control system 140, the elevator control system 130 may assign the elevator 120 (i.e., the elevator 120 to be called) to move to a floor on which the robot 100 is present, among the elevators 110 and may transfer elevator number information representing the assigned elevator 120 to the robot control system 140. For example, the elevator control system 130 may select the elevator 120 set as the dedicated elevator in operation S520, as the elevator 110 to be called. Alternatively, the elevator control system 130 may select, as the elevator 120 to be called, the elevator 110 nearest to the floor indicated by the call from among the elevators 110. Alternatively, the elevator control system 130 may calculate the amount of time used by each of the elevators 110 to move to the floor indicated by the call and may select, as the elevator 120 to be called, the elevator 120 capable of most quickly moving to the floor indicated by the call, for example, the elevator 120 with the smallest number of stopping floors before moving to the floor indicated by the call.

Also, the elevator control system 130 may not select, as the elevator 120 to be called, an elevator 110 being used for a special purpose (e.g., moving, maintenance, VIP use, etc.) or an elevator 110 in a "full" (capacity) state from among the elevators 110.

The elevator control system 130 may assign the elevator 120 capable of guaranteeing an available area for the robot 100 based on the congestion level of each of the elevators 110. In the case of using the elevator 120 with a general user, the elevator control system 130 may select the elevator 120 to be used by the robot 100 based on the congestion level of each of the elevators 110 to secure a space and a retreat for the robot 100. The congestion level of each of the elevators 110 may be calculated by the elevator control system 130 based on the number and the weight of the persons and the robots 100 aboard. If the congestion level of the first arriving elevator is high, the robot 100 may call for and use another elevator. Also, when the congestion level of the elevator 120 that the robot 100 is currently aboard is determined to be high based on the robot 100, another elevator 110 may be assigned to the floor on which an elevator has been called by skipping this floor. Therefore, the elevator control system 130 may not call some of the elevators 110 based on the congestion level according to the internal boarding state of each of the elevators 110.

In response to receiving, from the robot control system 140, a call including an area required by the robot 100 when the robot 100 boards, the elevator control system 130 may assign the elevator 120 capable of providing the corresponding area indicated by the call based on an area available in each of the elevators 110. When an area physically occupied by the robot 100 is greater than the area required, the robot control system 140 may transfer information about the corresponding area to the elevator control system 130.

The elevator control system 130 may transfer, to the robot control system 140, elevator number information representing the elevator 120 assigned to the robot 100 among the elevators 110.

In operation S540, the elevator control system 130 may control the assigned elevator 120 to move to the floor indicated by the corresponding call.

In operation S550, the elevator control system 130 may receive, from the robot control system 140, state information associated with boarding and alighting of the robot 100 and may control door opening and closing of the elevator 120 based on the state information of the robot 100. The state information may represent a state of the robot 100 to which the elevator 120 is assigned and may represent a state in which the robot 100 is waiting in front of a planned elevator number, a boarding cancellation state, a boarding state, a boarding completion state, an alighting state, and an alight completion state.

In operation S560, when boarding of the robot 100 is completed in the elevator 120 according to door opening and closing of the elevator 120, the elevator control system 130 may control the elevator 120 boarded by the robot 100 to move to the target floor on which the robot 100 is to provide a service. The elevator control system 130 may automatically move the elevator 120 to the corresponding target floor based on information about the target floor on which the robot 100 is to provide the service, included in the call.

Once the robot 100 is aboard the elevator 120, the elevator control system 130 may automatically move the elevator 120 to the target floor on which the robot 100 is to provide the service (without the robot 100 inputting the target floor).

When the robot 100 boards or alights from the elevator 120, the elevator control system 130 may maintain the control over door opening and closing of the elevator 120. When the elevator 120 moves to the floor indicated by the call and the door of the elevator 120 opens, the robot 100 may board the elevator 120. When the elevator 120 moves to the target floor on which the robot 100 is to provide the service and the door of the elevator 120 opens, the robot 100 may alight from the elevator 120. The elevator control system 130 may automatically open or close the door of the elevator 120 based on the state information associated with the boarding and the alighting of the robot 100 through interaction with the robot control system 140 using a server-to-server (S2S) scheme, without inputting a separate button for boarding or alighting of the robot 100.

In the case of boarding, when the robot 100 is waiting in a waiting space (an elevator room) for the elevator 120, the elevator control system 130 may open the door of the elevator 120 and may maintain a door open state of the elevator 120 until the robot 100 is completely aboard the elevator 120 and then may close the door of the elevator 120.

Likewise, in the case of alighting, when the elevator 120 arrives at the target floor on which the robot 100 is to provide the service, the elevator control system 130 may open the door of the elevator 120 and may maintain a door open state of the elevator 120 until alighting of the robot 100 from the elevator 120 is completed and then may close the door of the elevator 120.

Therefore, the elevator control system 130 may directly control door opening and closing of the elevator 120 based on state information of the robot 100 received from the robot control system 140.

When the robot 100 is boarding or planned to board the elevator 120, the elevator control system 130 may adjust the full capacity of the elevator 120 to secure a boarding space for the robot 100. For example, the elevator control system 130 may set the full capacity representing a standard for handling the fullness of the elevator 120 to a certain lower capacity based on the number of robots 100 aboard or planned to board the elevator 120, the area required, and the movement purpose, that is, the service to be provided by the robot 100.

Once the robot 100 boards the elevator 120, the external user interface of the elevator 120 may display that the robot 100 is aboard the elevator 120. Also, the internal user interface of the elevator 120 may also display that the robot 100 is aboard. The internal user interface of the elevator 120 may also display a floor on which the aboard robot 100 is to provide a service. That is, the internal user interface of the elevator 120 may display a floor on which the boarded robot 100 is to alight from the elevator 120 to provide the service. A display control for the external user interface and the internal user interface may be performed by the UI controller 326.

The elevator control system 130 may configure at least one of the internal user interface and the external user interface of the elevator 120 to display whether the robot 100 is using the elevator 120. For example, as described above, the elevator control system 130 may configure at least one of the external user interface and the internal user interface to display that the elevator 120 is set as the dedicated elevator. Alternatively or additionally, the elevator control system 130 may configure at least one of the external user interface and the internal user interface to display that the robot 100 is aboard the elevator 120.

Meanwhile, when the elevator 120 is set as the dedicated elevator, or when the robot 100 is aboard the elevator 120, the elevator control system 130 may control the elevator 120 to not move to the floor called by a user. That is, when the elevator 120 is set as the dedicated elevator or when the robot 100 is aboard the elevator 120, the elevator 120 may be controlled such that the use of the robot 100 may take precedence over a call from a user.

Description related to technical features made above with reference to FIGS. 1 to 4 may apply to FIG. 5 and repeated description is omitted.

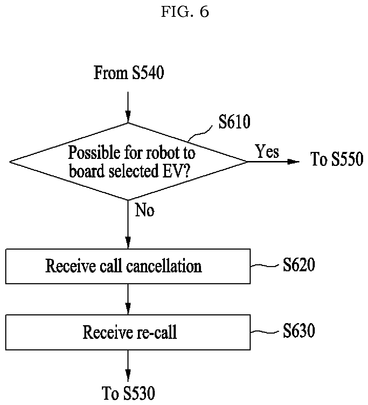

FIG. 6 is a flowchart illustrating an example of a method of re-calling an elevator depending on whether a robot may board a called elevator according to an example embodiment.

Hereinafter, an elevator control method in a case in which the called elevator 120 has arrived at a floor which the robot 100 is to board and the robot 100 may not board the elevator 120 is described with reference to FIG. 6.

Referring to FIG. 6, in operation S610, when the called elevator 120 arrives at a floor on which the robot 100 is to board, the elevator control system 130 may determine whether the robot 100 may board the elevator 120 through interaction with the robot control system 140. For example, the robot control system 140 may determine whether the robot 100 may board the elevator 120 depending on whether a sufficient space for the robot 100 to board is present in the elevator 120 through interaction with the robot 100.

When it is determined that boarding of the robot 100 is possible, the robot 100 may board the elevator 120.

In operation S620, when it is determined that boarding of the robot 100 is impossible, the elevator control system 130 may receive a call cancellation of the elevator 120 from the robot control system 140.

In operation S630, the elevator control system 130 may receive again, from the robot control system 140, a call that includes information about a floor on which the robot 100 is present as a call for requesting another elevator.

That is, when the door of the elevator 120 opens and the robot 100 verifies that there is no space in the elevator 120 or attempts to board but is difficult to secure a sufficient space, the robot 100 may transmit a boarding cancellation signal to the robot control system 140 and may request the robot control system 140 to call for another elevator. When it is determined that boarding of the robot 100 is impossible, the robot control system 140 may transmit a call cancellation of the elevator 120 to the elevator control system 130 and may transmit a call that includes information about a floor on which the robot 100 is present to request another elevator.

In response to the call for another elevator, the elevator control system 130 may select another elevator to move to a floor on which the robot 100 is present and may control the selected elevator to move to the corresponding floor.

If the aforementioned boarding cancellation and elevator re-call is repeated a preset number of times or more, the elevator 120 set as a robot-only elevator may operate.

Description related to technical features made above with reference to FIGS. 1 to 5 may apply to FIG. 6 and repeated description is omitted.

Depending on example embodiments, an appropriate elevator may be called for the robot 100 based on a congestion level inside the elevator 120.

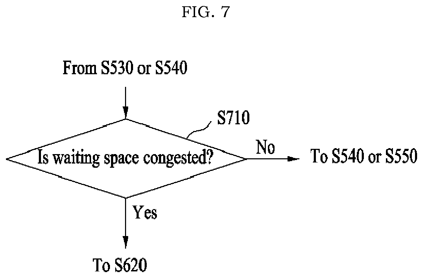

FIG. 7 is a flowchart illustrating an example of a method of re-calling an elevator depending on whether a waiting space for an elevator to be called is congested according to an example embodiment.

Hereinafter, an elevator control method in a case in which a waiting space for the elevator 120 is congested before or immediately after the called elevator 120 arrives at the floor on which the robot 100 is to board is described with reference to FIG. 7.

Referring to FIG. 7, in operation S710, before or even after the elevator 120 arrives at the floor on which the robot 100 is to board the elevator 120, the robot 100 or the robot control system 140 may determine whether a space (that is, a waiting space) for waiting for arrival of the elevator 120 is congested. For example, when at least a preset number of users or robots 100 are present in the waiting space for boarding the elevator 120, the robot 100 or the robot control system 140 may determine that the waiting space is congested.

When it is determined that the waiting space is not congested, the robot 100 may board the elevator 120.

When it is determined that the waiting space is congested, the elevator control system 130 may receive a call cancellation of the elevator 120 from the robot control system 140. Also, the elevator control system 130 may receive again, from the robot control system 140, a call that includes information about the floor on which the robot 100 is present as a call for requesting another elevator.

That is, when it is determined that the waiting space is congested, the robot control system 140 may transmit a call cancellation of the elevator 120 to the elevator control system 130 and may transmit again a call that includes information about the floor on which the robot 100 is present to request another elevator.

In response to the call for another elevator, the elevator control system 130 may select another elevator to move to the floor on which the robot 100 is present and may control the other elevator to move to the corresponding floor.

Description related to technical features made above with reference to FIGS. 1 to 6 may apply to FIG. 7 and repeated description is omitted.

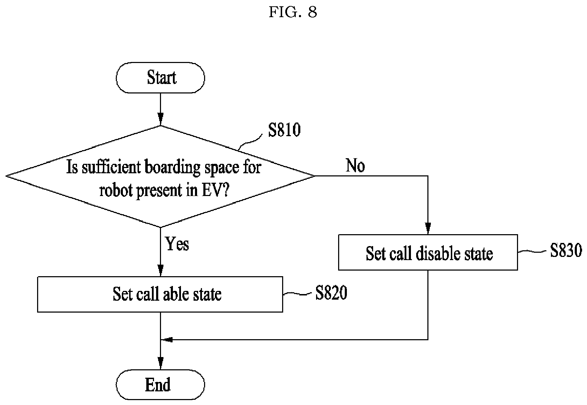

FIG. 8 is a flowchart illustrating an example of a method of setting an elevator to a call able/disable state depending on whether a robot may board an elevator to be called according to an example embodiment.

Referring to FIG. 8, in operation S810, the elevator control system 130 may determine whether a sufficient boarding space for the robot 100 is present in the elevator 120. For example, whether a sufficient boarding space for the robot 100 is present in the elevator 120 may be detected by the robot 100 that is aboard or about to board the elevator 120 and may be transmitted to the robot control system 140 or directly to the elevator control system 130 by the robot 100.

Alternatively, whether the sufficient boarding space for the robot 100 is present in the elevator 120 may be detected by a sensor included in the elevator 120. For example, it may be determined by a camera installed in the elevator 120 or a weight detection sensor installed in the elevator 120.

In operation S820, when it is determined that the sufficient boarding space for the robot 100 is present in the elevator 120, the elevator control system 130 may set the elevator 120 to a call able state.

In operation S830, when it is determined that the sufficient boarding space for the robot 100 is absent in the elevator 120, the elevator control system 130 may set the elevator 120 to a call disable state. For example, in this case, the elevator control system 130 may set the elevator 120 to be in a full state. The elevator 120 set to be in the full state may be set to the call disable state.

The elevator control system 130 may configure the internal user interface of the elevator 120 to output an indicator representing a full state. The indicator may induces a user aboard the elevator 120 to alight from the elevator 120. For example, the elevator control system 130 may output a visual or, additionally, auditory indicator through the internal user interface. The indicator may be output until the sufficient boarding space for the robot 100 is secured in the elevator 120 in response to the boarded user or the robot 100 alighting from the elevator 120. Once the sufficient boarding space for the robot 100 is secured in the elevator 120, output of the indicator may be stopped and the full state may also be released. When the full state is released, that is, when a sufficient boarding space is secured, the elevator 120 may be set to the call able state. In another embodiment, the elevator control system 130 may relay the elevator full state to the robot control system 140, which may in turn transmit the status to the robot 100 riding in the elevator, and the auditory indicator may be output from the robot 100.

Meanwhile, whether the elevator 120 is full may be displayed on the external user interface of the elevator 120.

Description related to technical features made above with reference to FIGS. 1 and 7 may apply to FIG. 8 and repeated description is omitted.

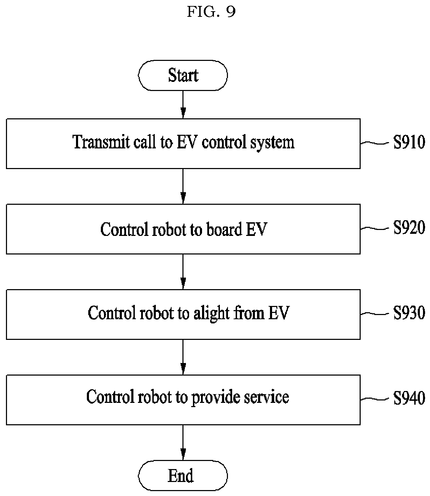

FIG. 9 is a flowchart illustrating an example of a method of calling an elevator for boarding of a corresponding robot using a control system that controls a robot and controlling boarding of the robot according to an example embodiment.

Hereinafter, an operation from perspective of the robot control system 140 is described with reference to FIG. 9.

Referring to FIG. 9, in operation S910, the robot control system 140 may transmit, to the elevator control system 130 that controls the elevators 110, a call that includes information about the current floor on which the robot 100 is present and a target floor on which the robot 100 is to provide a service.

In operation S920, in response to the call, the robot control system 140 may control the robot 100 to board the elevator 120 that is moving to the floor on which the robot 100 is present.

The elevator 120 may automatically move to the floor on which the robot 100 is to provide the service based on information about the target floor on which the robot 100 is to provide the service, included in the call.

In operation S930, as the elevator 120 arrives at the floor on which the robot 100 is to provide the service, the robot control system 140 may control the robot 100 to alight from the elevator 120.

In operation S940, the robot control system 140 may control the robot 100 having alighted from the elevator 120 to provide the service on the target floor.

As described above, when the robot 100 arrives at the waiting space for the elevator 120, the robot control system 140 may transfer the waiting state of the robot 100 to the elevator control system 130. In response to receiving a door open state of the elevator 120 from the elevator control system 130, the robot control system 140 may control the robot 100 to board the elevator 120 or to alight from the elevator 120. When boarding or alighting of the robot 100 is completed, the robot control system 140 may transfer the corresponding state information of the robot 100 to the elevator control system 130. In response to receiving a boarding completion state or an alight completion state of the robot 100 from the robot control system 140, the elevator control system 130 may switch the door open state of the elevator 120 to a door close state.

As described above, when at least a preset number of users or robots 100 are present in the waiting space for the elevator 120 that moves to a floor on which the robot 100 is present in response to the call, or when the robot 100 may not board the elevator 120 moved to the floor on which the robot 100 is present, the robot control system 140 may transmit a cancellation of the corresponding call to the elevator control system 130 and may transmit again a call for requesting another elevator.

The aforementioned operations may be implemented to be performed by not the robot control system 140 but the robot 100 based on a configuration of an example embodiment.

Description related to technical features made above with reference to FIGS. 1 to 8 may apply to FIG. 9 and repeated description is omitted.

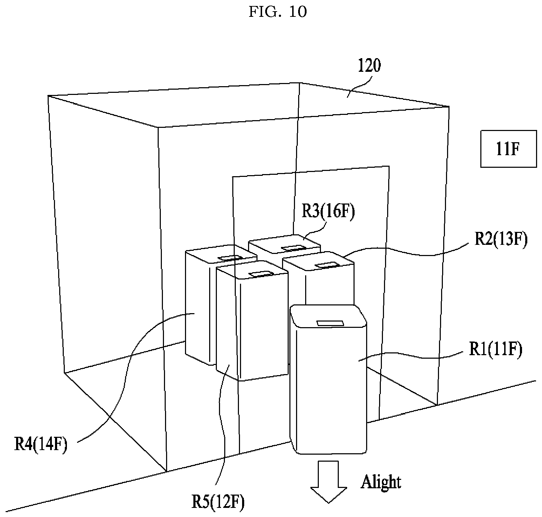

FIG. 10 illustrates an example in which a plurality of robots boards or alights from an elevator according to an example embodiment.

The elevator 120 may be set as a general elevator or a dedicated elevator for boarding of the robot 100.

FIG. 10 illustrates an example in which a plurality of robots R1, R2, R3, R4, and R5 are aboard the elevator 120 and, as the elevator 120 arrives at the 11^{th} floor (11F), the robot R1 configured to provide a service on the 11^{th} floor alights from the elevator 120. Referring to the example of FIG. 10, the robot R1 is configured to provide a service on the 11^{th} floor, the robot R2 is configured to provide a service on the 13^{th} floor, the robot R3 is configured to provide a service on the 16^{th} floor, the robot R4 is configured to provide on the 14^{th} floor, and the robot R5 is configured to provide a service on the 12^{th} floor.

The EV controller 324 may control the elevator 120 to sequentially move to the floor on which each of the plurality of robots R1 to R5 is to provide a service (refer to operation S560). Each of the plurality of robots R1 to R5 may be aboard the elevator 120 in response to a call of the elevator 120 according to a request associated with each corresponding robot.

That is, the elevator control system 130 may receive calls associated with the plurality of robots R1 to R5 from the robot control system 140 in operation S520, and may select an elevator to be called to a floor indicated by each of the calls in operation S530. A plurality of elevators may be called. In FIG. 10, the elevator 120 is selected and called.

The elevator control system 130 may control the elevator 120 such that the robot R3 to alight from the elevator 120 relatively later among the plurality of robots R1 to R5 may relatively earlier board the elevator 120. In the example of FIG. 10, the plurality of robots R1 to R5 may alight from the elevator 120 in order of the robot R1, the robot R5, the robot R2, the robot R4, and the robot R3. Therefore, the elevator 120 may be controlled such that the plurality of robots R1 to R5 may board in order of the robot R3, the robot R4, the robot R2, the robot R5, and the robot R1 (regardless of the call order). In the example embodiment, the plurality of robots R1 to R5 may alight on respective corresponding floors for providing a service without interference among the plurality of robots R1 to R5. The example embodiments may be performed when a plurality of calls is present within a predetermined (relatively short) period of time.

Alternatively, the plurality of robots R1 to R5 may board the elevator 120 in call order thereof. The plurality of robots R1 to R5 may appropriately move in the elevator 120 and the robot R1 to alight from the elevator 120 first may be placed in front, for example, close to a door.

The plurality of robots R1 to R5 may board the elevator 120 in a group on a single floor.

Description related to technical features made above with reference to FIGS. 1 and 9 may apply to FIG. 10 and repeated description is omitted.

FIG. 11 illustrates an example of an external user interface of an elevator according to an example embodiment.

Referring to FIG. 11, an external user interface 1100 of the elevator 120 may be provided at one side or both sides of an external door of the elevator 120. The external user interface 1100 may include a display.

An external user interface 1110 may represent an external user interface in terms of a general use and an external user interface 1120 may represent an external user interface when the elevator 120 is set as a dedicated elevator, for example, a robot-only elevator.

Referring to FIG. 11, the external user interface 1110 may display whether the elevator 120 ascends or descends ((a): ascend (upward indicator with an arrowhead), (b) descend (downward indicator with an arrowhead), the current position of the elevator 120 ((a): 10^{th} floor, (b): 18^{th} floor), and a planned stopping floor of the elevator 120 ((a): 19^{th} floor, 16^{th} floor, (b): 8^{th} floor, 1^{st} floor).

The external user interface 1120 may include a method of inducing a user to not board the elevator 120 although a door of the elevator 120 opens, as a method of displaying a state for robot-only boarding. The external user interface 1120 may display an image (a robot image) indicating that the elevator 120 is set as a dedicated elevator. The external user interface 1120 may not display whether the elevator 120 ascends or descends, a current position of the elevator 120, and a planned stopping floor of the elevator 120.

That is, the UI controller 326 may configure the external user interface 1120 of the elevator 120 to display that the robot 100 is aboard or that the elevator 120 is used as a dedicated elevator for boarding of the robot 100. Here, the UI controller 326 may configure the external user interface 1120 to not display whether the elevator 120 is ascending or descending, the target floor of a person, the current position of the elevator 120, or the planned stopping floor of the elevator 120 (or at least one thereof). Based on the configuration of the external user interface 1120, a user may be induced to refrain from using the elevator 120 being used by the robot 100 or the dedicated elevator for boarding of the robot 100.

An image indicating a special purpose use of the elevator 120, may be displayed in a state display area in which a robot image of the external user interface 1120 is displayed. The special purpose use may be, for example, for VIP use, or maintenance use, in addition to robot-only use.

In the case of a dedicated elevator, use by a general user is not completely excluded. Therefore, when the user boards the elevator 120 set as the dedicated elevator, the user may move to a desired floor by manipulating the internal user interface (e.g., a floor selection button) of the elevator 120.

Description related to technical features made above with reference to FIGS. 1 to 10 may apply to FIG. 11 and repeated description is omitted.

FIG. 12 illustrates an example of an internal user interface of an elevator according to an example embodiment.

Referring to FIG. 12, an internal user interface 1200 of the elevator 120 may be provided at both sides (or one side) of an internal door of the elevator 120. The internal user interface 1200 may include a display and buttons.

Referring to FIG. 12, the internal user interface 1200 may include a first portion 1210 (i.e., first portions 1210-1 and 1210-2) and a second portion 1220 (i.e., second portions 1220-1 and 1220-2).

The first portion 1210 may represent a user interface for the purpose of displaying information related to the elevator 120, and the second portion 1220 may refer to a floor selection user interface and may be configured as, for example, a touchscreen.

The first portion 1210-1 and the second portion 1220-1 may represent a configuration of the internal user interface 1200 in terms of general use of the elevator 120. The first portion 1210-2 and the second portion 1220-2 may represent a configuration of the internal user interface 1200 in terms of dedicated use of the robot 100 for the elevator 120.

The second portion 1220-1 may be configured as a general floor selection screen as a floor selection touchscreen. Information about a floor to which the elevator 120 may move and a button corresponding to the floor may be displayed on the second portion 1220-1. Also, a door open button and a door close button of the elevator 120 may be displayed on the second portion 1220-1.

Basically, a current position of the elevator 120, whether the elevator 120 is ascending or descending, or a planned stopping floor of the elevator 120 may be displayed on the first portion 1210-1. The planned stopping floor may include a planned robot boarding and alighting floor. In the case of the planned robot boarding and alighting floor, an indicator may also be displayed to be distinguished from other planned stopping floors.

The planned robot boarding and alighting floor displayed on the first portion 1210-1 aims to seek understanding from a passenger in advance since boarding or alighting of the robot 100 is planned, along with information indicating that the elevator 120 will stop on a corresponding floor.

A planned stopping floor on which the robot 100 is to board the elevator 120 may be displayed on the first portion 1210-1 of the elevator 120 to which the robot 100 is assigned. When the elevator 120 arrives at the corresponding floor, display of the corresponding planned stopping floor may disappear.

When the elevator 120 arrives at the floor on which the robot 100 is to board, a robot boarding guidance voice "The robot is about to board," may be provided with an arrival sound. Here, a boarding guidance message "The robot is about to board," may be displayed on one area, for example, a lower end area, of the first portion 1210-1. Even after the elevator 120 arrives and the door of the elevator 120 opens, the robot may cancel boarding due to some reasons. Therefore, "Planned to board" may be informed during or before boarding.

While the robot 100 is boarding the elevator 120, the boarding guidance message "The robot is boarding the elevator," may be displayed on the first portion 1210-1, which is to secure a boarding path of the robot 100 and to seek understanding from the user to wait for a while. In addition, the robot control system 140 may display information about a target floor on which the robot 100 is to alight from the elevator 120 on the robot 100 aboard the elevator 120 to be recognized by passengers (users) in the elevator 120.

When the elevator 120 arrives at a floor on which the robot 100 is to board the elevator 120 and the door of the elevator 120 opens, a close button may not immediately operate and be delayed for a preset period of time. Here, a close button delay guidance message "Please wait until the robot boards the elevator," may be displayed on one area of the second portion 1220-1, for example, a lower end area or an area adjacent to the close button.

When boarding of the robot 100 is completed in the elevator 120, a boarding guidance message "Boarding of the robot is completed," may be displayed on the first portion 1210-1 as a state indication for boarding completion. Since the robot 100 may not board the assigned elevator 120, the target floor of the robot 100 having boarded the elevator 120 may be displayed as a planned stopping floor on the first portion 1210-1 with a robot display indicator.

When boarding of the robot 100 is difficult due to the robot 100 failing in arriving at a waiting space of the elevator 120 in time, or when it is determined that boarding of the robot 100 is impossible due to insufficient space, the robot 100 may cancel boarding the elevator 120 and may inform other passengers of corresponding information. When a state of "Planned to board" or "Boarding" is changed to a state of "Boarding cancelled," a boarding cancellation message "Boarding of the robot is cancelled," may be displayed on the first portion 1210-1.

Due to boarding or planned boarding of the robot 100, the full capacity of the elevator 120 may decrease, which may cause the elevator 120 to be processed as being full. In this case, a fullness notification message may be displayed on the first portion 1210-1 to seek understanding from passengers. When the elevator 120 is processed as being full in a state in which the robot 100 is not aboard, a guidance voice "The robot is about to board. Please use the next elevator," according to planned boarding of the robot 100 may be output as additional information to seek understanding from passengers.

When the elevator 120 arrives at the target floor of the robot 100 and the robot 100 is planned to alight from the elevator 120, an alighting guidance message "The robot is getting off the elevator," may be displayed on the first portion 1210-1, which is to secure an alighting path of the robot 100 and to seek understanding from other passengers for waiting.

When the elevator 120 arrives at a floor on which the robot 100 is planned to alight from the elevator 120, a robot alighting guidance voice "The robot is planned to get off the elevator," may be provided with an arrival sound. After the door of the elevator 120 opens, the close button may not immediately operate and be delayed for a preset period of time. Here, a close button delay guidance message "Please wait until the robot gets off the elevator," may be displayed on one area of the second portion 1220-1, for example, a lower end area or an area adjacent to the close button.

When alighting of the robot 100 from the elevator 120 is completed, an alight completion guidance message "The robot is off the elevator," may be displayed on the first portion 1210-1.

During delay of the close button, the close button may be displayed in an inactive state on the second portion 1220-1 to prevent a user from forcefully closing the door of the elevator 120. The close button may be inactivated only when boarding or alighting of the robot 100 is ongoing after the door of the elevator 120 opens.

Such inactivation of the close button is to prevent the user from closing the door. Here, a button may not be displayed on the second portion 1220-1. Alternatively, a button may be displayed on the second portion 1220-1 or displayed to be distinguished from an active button, for example, displayed blurrily, but may not be input.

That is, the elevator control system 130 may maintain the door of the elevator 120 in a forcefully open state until a boarding or alighting process of the robot 100 is completed.

An indicator representing that the elevator 120 is set as a dedicated elevator may be displayed on the first portion 1210-2 or the second portion 1220-2. The indicator may include, for example, a robot image and a text such as "It is a robot-only elevator. Please use another elevator."

In a robot-only mode, the elevator 120 for boarding of the robot 100 only may be operated in a specific time zone. In the case of using the elevator 120 in the robot-only mode, it is to prevent boarding of a person. To this end, a floor selection button may be configured in an inactive state on the second portion 1220-2. In the robot-only mode, a floor selection is disabled, information about whether the elevator 120 is ascending or descending, and a stopping floor may not be provided, and an illumination in the elevator 120 may be turned OFF. That is, the second portion 1220-2 may be configured such that all floor selection buttons and a door close button are in an inactive state.

Description related to technical features made above with reference to FIGS. 1 to 11 may apply to FIG. 12 and repeated description is omitted.

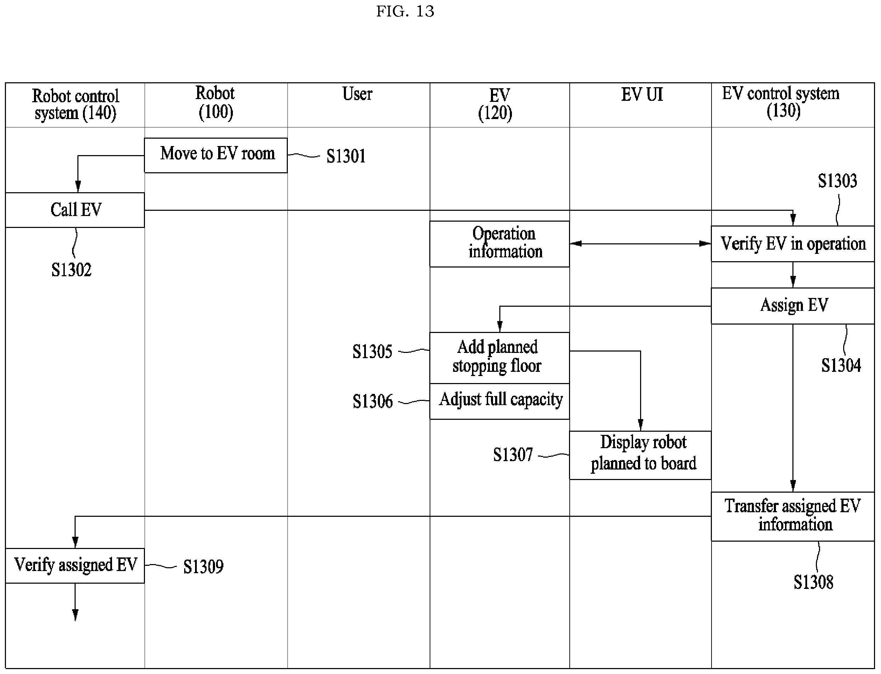

FIGS. 13 to 19 illustrate examples of an operation of a robot control system, a robot, an elevator, and an elevator control system from a point in time at which a robot calls an elevator to a point in time at which the robot alights from the elevator according to an example embodiment.

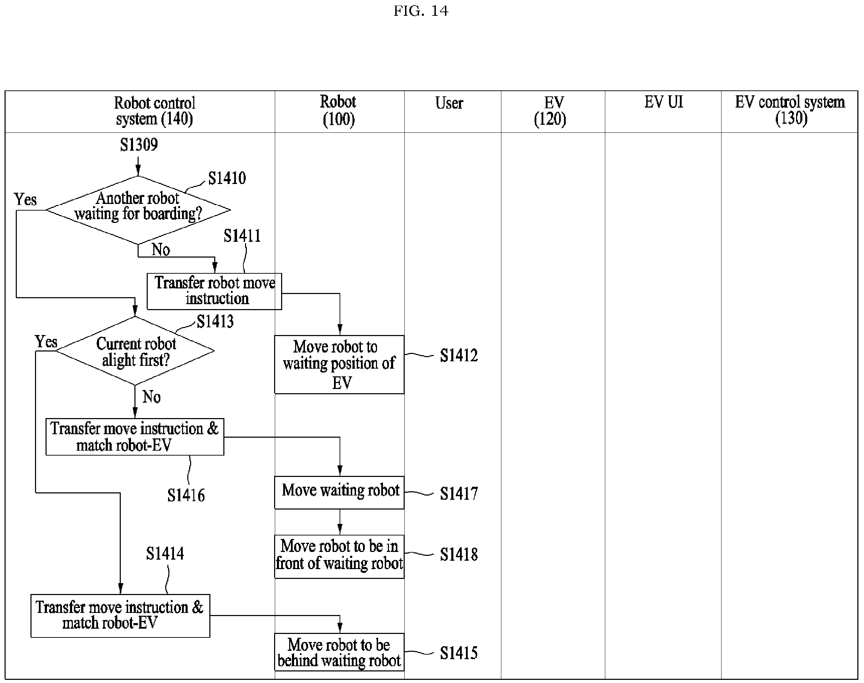

Initially, an elevator calling process is described with reference to FIGS. 13 and 14.

Referring to FIG. 13, in operation S1301, the robot 100 may move to an elevator room (a waiting space for boarding the elevator 120) to move to a floor in a building. In operation S1302, the robot control system 140 may call the elevator 120 using the elevator control system 130. The call may include at least one of information about the current floor and the target floor (a floor for providing a service) of the robot 100, information about a space (a required area) required in the elevator 120, and information about whether quickness is required (e.g., quickness may be required if the robot 100 is on a delivery and otherwise, quickness may not be required). In operation S1303, the elevator control system 130 may verify the elevators 110 currently in operation and may verify operation information of each of the elevators 110 in operation. The operation information may include information about the current position of each of the elevators 110, a planned stopping floor, and an in-elevator available area. In operation S1304, the elevator control system 130 may assign the elevator 120 to the robot 100 based on the operation information of each of the elevators 110. In operation S1305, a planned stopping floor for boarding of the robot 100 may be added to the assigned elevator 120. Here, in operation S1306, a full capacity of the elevator 120 may be adjusted based on a boarding plan of the robot 100. In operation S1307, a planned robot boarding state on the planned stopping floor may be displayed through the internal user interface 1200 of the elevator 120. In operation S1308, the elevator control system 130 may transfer elevator number information representing the assigned elevator 120 to the robot control system 140. In operation S1309, the robot control system 140 may verify the assigned elevator 120.

Referring to FIG. 14, in operation S1410, the robot control system 140 may determine whether the same elevator 120 is assigned to another robot among robots waiting for boarding on the same floor as the robot 100. When it is determined that there is no other robot waiting for boarding the assigned elevator 120, the robot control system 140 may transfer a move instruction to the robot 100 in operation S1411 and may move the robot 100 to a waiting position of the assigned elevator 120 in operation S1412. In contrast, when another robot waiting for boarding the assigned elevator 120 is present, the robot control system 140 may compare the target floor of the robot 100 and the target floor of the other robot and may determine whether the robot 100 is to alight first in operation S1413. When the robot 100 is to alight first rather than the other robot waiting for boarding, the robot control system 140 may transfer a move instruction to the robot 100 and, at the same time, may set the elevator alight order between the robots in operation S1414, and may move the robot 100 to be behind the other robot waiting for boarding at a standby position for the assigned elevator 120 in operation S1415. When the other robot waiting for boarding is to alights first rather than the robot 100, the robot control system 140 may transfer a move instruction to both the robot 100 and the other robot and, at the same time, may set the elevator alight order between the robots in operation S1416, and may initially move the other robot waiting for boarding at the standby position for the assigned elevator 120 in operation S1417 and may move the robot 100 to be in front of the other robot waiting for boarding in operation S1418.

That is, when the same elevator 120 is assigned to a plurality of robots present on the same floor, the robot control system 140 may queue the robots in alight order according to the target floor of each robot, that is, such that a robot to alight first may board last.

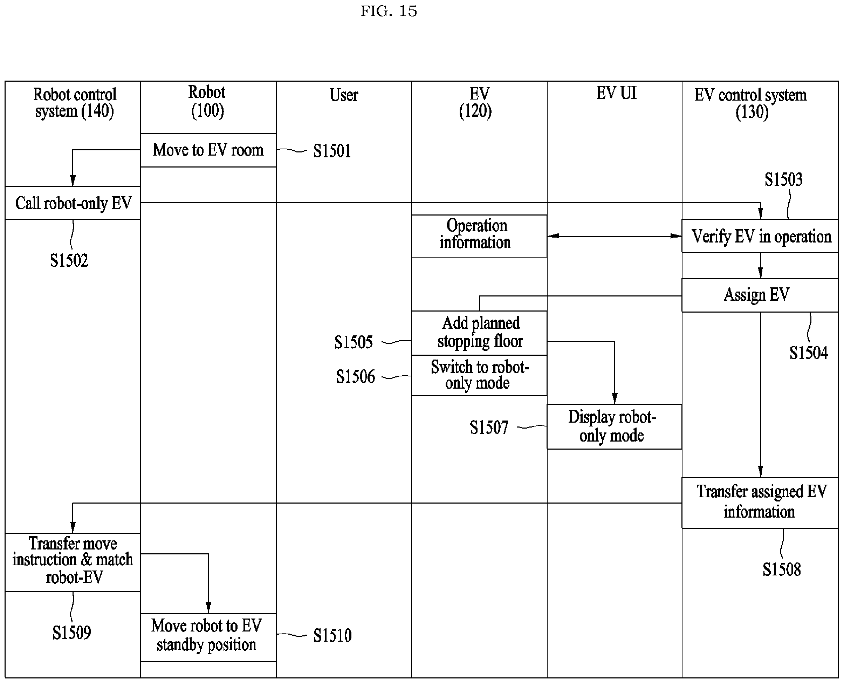

Hereinafter, a robot-only elevator calling process is described with reference to FIG. 15.

Referring to FIG. 15, in operation S1501, the robot 100 may move to an elevator room (a waiting space for boarding the elevator 120) for movement between floors in a building. When a plurality of robots is present or when the robot 100 is a relatively large robot that requires at least a desired area, the robot control system 140 may call an elevator operable in a robot-only mode using the elevator control system 130 in operation S1502. The call may include at least one of information about the current floor and the target floor (a floor for providing a service) of the robot 100, information about a space (a required area) required in the elevator 120, and information about whether quickness is required (e.g., quickness may be required if the robot 100 is on a delivery and otherwise, quickness may not be required). In operation S1503, the elevator control system 130 may verify the elevators 110 currently in operation and may verify operation information of each of the elevators 110 in operation. The operation information may include the current position of each of the elevators 110, the planned stopping floor, and the congestion level indicating an in-elevator available area. The elevator control system 130 may verify the number of the elevators 110 in which a person is absent and not called among the elevators 110 currently in operation. In operation S1504, the elevator control system 130 may assign one of the elevators 110 as the robot-only elevator based on the operation information of each of the elevators 110. In operation S1505, a planned stopping floor for boarding of the robot 100 may be added to the elevator 120 assigned as the robot-only elevator. Here, the assigned elevator 120 may be switched to a robot-only mode in operation S1506, and the robot-only mode may be displayed through the external user interface of the elevator 120 in operation S1507. A floor selection button on the internal user interface 1200 may be inactivated and an internal illumination of the elevator 120 may be turned OFF or dimmed. In operation S1508, the elevator control system 130 may transfer elevator number information representing the elevator 120 assigned as the robot-only elevator to the robot control system 140. The robot control system 140 may verify the assigned elevator 120 and may transfer a move instruction to the robot 100 and, at the same time, may set the elevator alight order between robots in operation S1509 and may move the robot 100 to a standby position for the assigned elevator 120 in operation S1510.

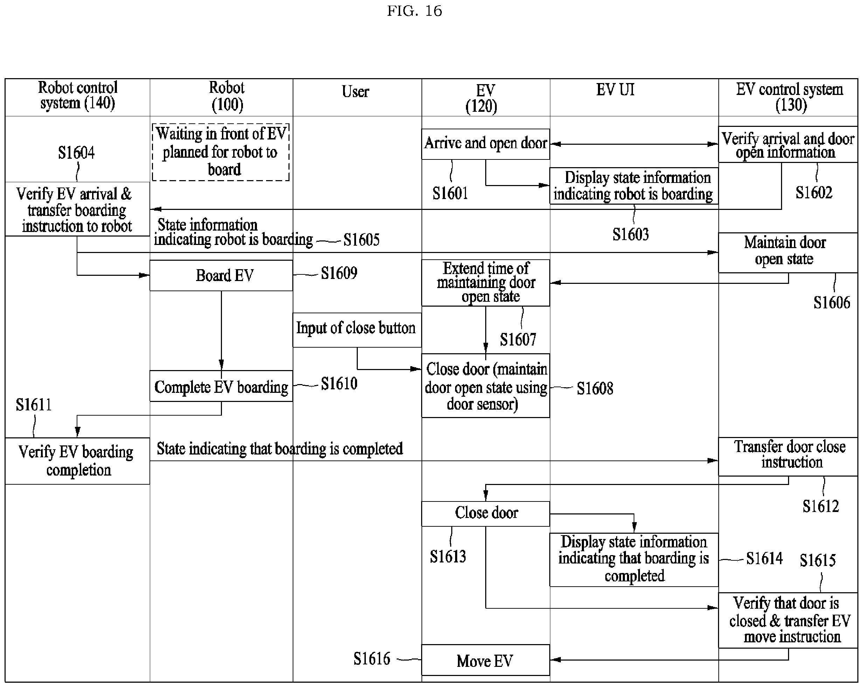

Hereinafter, a process of boarding, by the robot 100, the elevator 120 is described with reference to FIG. 16.

Referring to FIG. 16, when the elevator 120 arrives at a floor and the door of the elevator 120 opens in a state in which the robot 100 is waiting in front of the elevator 120 planned for the robot 100 to board in operation S1601, the elevator control system 130 may verify arrival and door open information of the elevator 120 in communication with the elevator 120 in operation S1602. In operation S1603, state information indicating that the robot 100 is boarding may be displayed on the internal user interface 1200 of the elevator 120. In operation S1604, the robot control system 140 may receive arrival and door open information of the elevator 120 from the elevator control system 130 and verify the arrival and door open information of the elevator 120 and then transfer a boarding instruction to the robot 100. In operation S1605, the robot control system 140 may transfer the boarding instruction to the robot 100 and, at the same time, transfer state information indicating that the robot 100 is boarding to the elevator control system 130. In operation S1606, the elevator control system 130 may control the elevator 120 to maintain a door open state based on the state information indicating that the robot 100 is boarding. Here, in operation S1607, the door of the elevator 120 may be prevented from closing during a preset period of time (e.g., 3 minutes) through a method for extending the time for maintaining a door open state. Although the door closes in response to an input of the door close button from the user, the door open state may be maintained through a door sensor during boarding of the robot 100 in operation S1608. When boarding completion state information of the robot 100 is not received from the robot control system 140 within a door close delay time, the elevator control system 130 may additionally extend the time of maintaining the door open state. In operation S1609, the robot 100 may board the elevator 120 in response to the boarding instruction from the robot control system 140. Here, the robot control system 140 may transfer the state information indicating that the robot 100 is boarding to the elevator control system 130. When boarding of the robot 110 is completed in operation S1610, the robot control system 140 may verify a boarding completion state of the robot 110 and may transfer a robot boarding completion state to the elevator control system 130 in operation S1611. In response to receiving boarding completion state information of the robot 100, the elevator control system 130 may transfer a door close instruction to the elevator 120 in operation S1612. In operation S1613, the elevator 120 may close the door in response to the door close instruction from the elevator control system 130. In operation S1614, state information indicating that boarding of the robot 100 is completed may be displayed through the internal user interface. When the door of the elevator 120 closes, the elevator control system 130 may verify that the door is closed and, at the same time, transfer a move instruction of the elevator 120 in operation S1615. In operation S1616, in response to the move instruction from the elevator control system 130, the elevator 120 may vertically move.

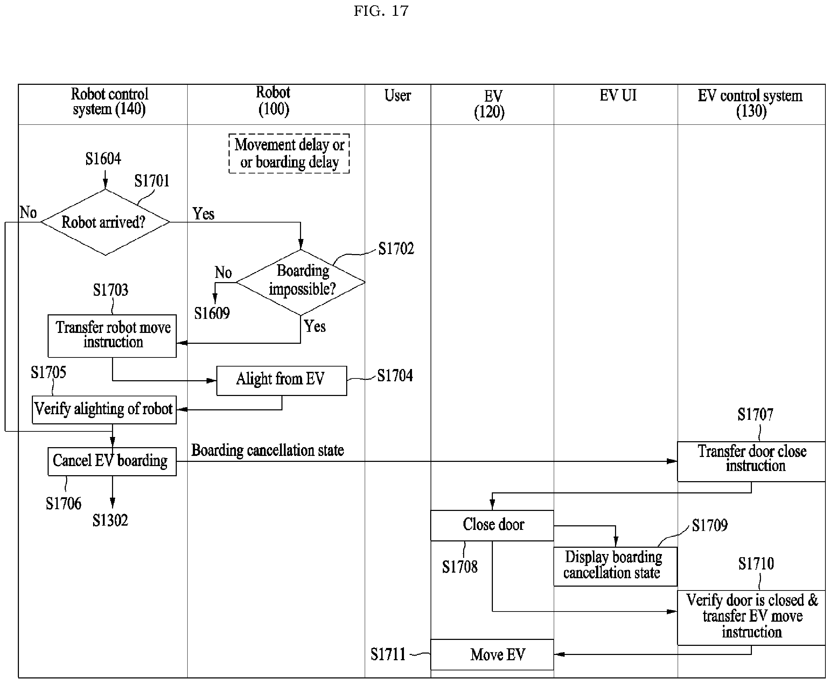

Hereinafter, a process of cancelling, by the robot control system 140, the boarding of the elevator 120 is described with reference to FIG. 17.

Referring to FIG. 17, after the robot 100 receives the boarding instruction from the robot control system 140, movement delay or boarding delay to the standby position for the elevator 120 may occur due to interference elements such as a person or an obstacle. Here, in operation S1701, the robot control system 140 may transfer the boarding instruction to the robot 100 and may verify whether the robot 100 has arrived at the standby position for the elevator 120 within a preset period of time (e.g., 1 minute). When the robot 100 does not arrive in front of the elevator 120 within the corresponding period of time after receiving the boarding instruction, the robot control system 140 may cancel boarding of the robot 100 in operation S1706 and may perform again the aforementioned elevator calling process (the elevator calling process described above with reference to FIGS. 13 and 14) for an elevator re-call. When the robot 100 arrives in front of the elevator 120 within the preset period of time in operation S1701, the robot 100 may attempt to board the elevator 120 in response to the boarding instruction. Here, in operation S1702, the robot 100 may determine whether it may board the elevator 120 due to many persons in the elevator 120 (and/or other robots). When the robot 100 may not board the elevator 120 due to an internal congestion of the elevator 120, the robot control system 140 may transfer a move instruction such that the robot 100 may alight from the elevator 120 in operation S1703. After the robot 100 alights from the elevator 120 in operation S1704, the robot control system 140 may verify an alight completion state of the robot 100 in operation S1705. When alighting of the robot 100 is completed, the robot control system 140 may cancel boarding the elevator 120 in operation S1706 and may perform again the aforementioned elevator calling process for the elevator re-call. Here, in response to receiving a boarding cancellation state of the robot 110 from the robot control system 140, the elevator control system 130 may transfer a door close instruction to the elevator 120 in operation S1707. In operation S1708, in response to the door close instruction from the elevator control system 130, the elevator 120 may close the door. In operation S1709, state information indicating that boarding of the robot 100 is cancelled may be displayed through the internal user interface 1200. When the door of the elevator 120 closes, the elevator control system 130 may verify that the door is closed and, at the same time, transfer a move instruction of the elevator 120 in operation S1710. In operation S1711, in response to the move instruction from the elevator control system 130, the elevator 120 may vertically move.

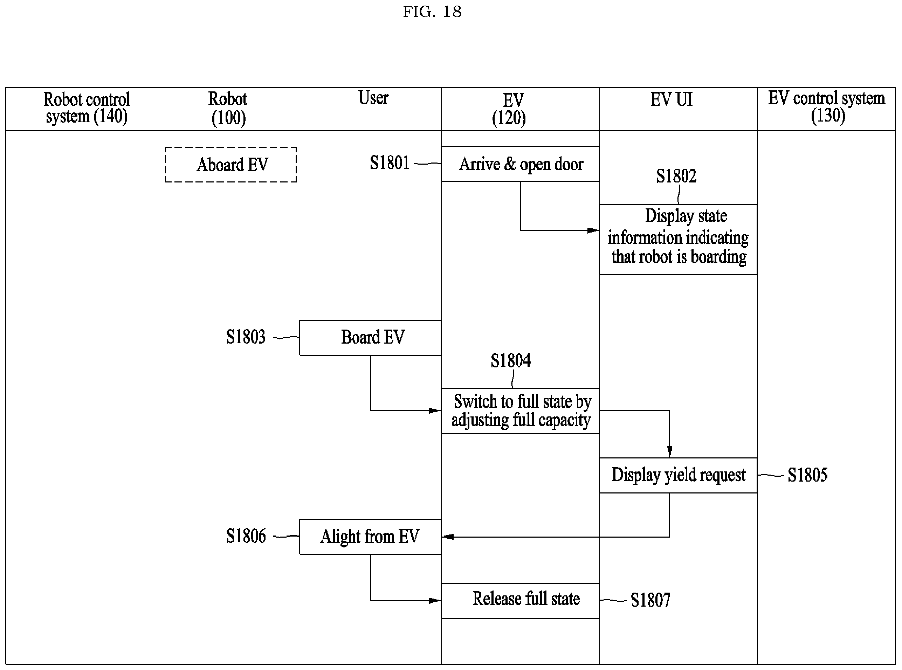

Hereinafter, a process of processing the fullness of the elevator 120 is described with reference to FIG. 18.

Referring to FIG. 18, when the elevator 120 arrives at a planned stopping floor and the door of the elevator 120 opens in a state in which the robot 100 is aboard or planned to board the elevator 120 in operation S1801, state information indicating that the robot 100 is boarding or planned to board may be displayed on an internal user interface 1200 of the elevator 120 in operation S1802. When the door of the elevator 120 opens and a person additionally boards the elevator 120 in operation S1803, a state of the elevator 120 may be switched to a full state by adjusting the full capacity of the elevator 120 based on boarding or planned boarding of the robot 100 in operation S1804. In operation S1805, some persons may be induced to alight from the elevator 120 by displaying a "Full" state of the elevator 120 on the internal user interface 1200 of the elevator 120 and requesting yielding a space for the robot 100 in operation S1805. If some persons alight from the elevator 120 until an indication of "Full" disappears in operation S1806, the full state of the elevator 120 may be released in operation S1807. The door of the elevator 120 may be closed and the indication of "Full" may be released on the internal user interface 1200.

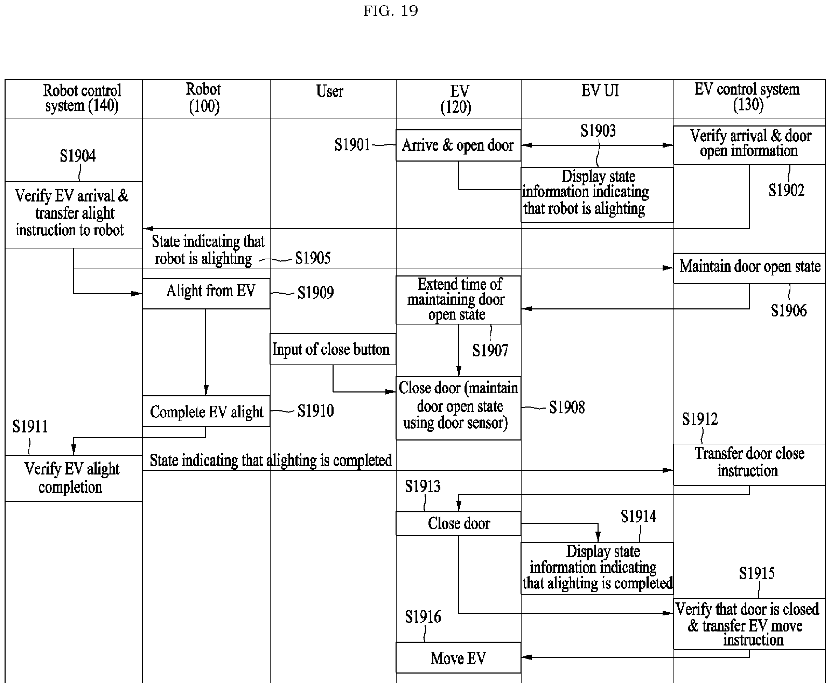

Hereinafter, a process of alighting, by the robot 100, from the elevator 120 is described with reference to FIG. 19.

Referring to FIG. 19, when the elevator 120 arrives at the target floor of the robot 100 and the door of the elevator 120 opens in operation S1901, the elevator control system 130 may verify arrival and door open information of the elevator 120 in communication with the elevator 120 in operation S1902. Here, in operation S1903, state information indicating that the robot 100 is alighting may be displayed through the internal user interface 1200 of the elevator 120. In operation S1904, the robot control system 140 may receive arrival and door open information of the elevator 120 from the elevator control system 130, may confirm the arrival and door open of the elevator 120, and may transfer an alight instruction to the robot 100 in operation S1904. In operation S1905, the robot control system 140 may transfer the alight instruction to the robot 100 and, at the same time, transfer state information indicating that the robot 100 is alighting to the elevator control system 130. In operation S1906, the elevator control system 130 may control the elevator 120 to maintain a door open state based on the state information indicating that the robot 100 is alighting. Here, in operation S1907, the door of the elevator 120 may be prevented from closing during a preset period of time (e.g., 3 minutes) through a delay method for delaying a time of maintaining a door open state. Although the door closes in response to an input of the door close button from the user, the door open state may be maintained through a door sensor during alighting of the robot 100 in operation S1908. When the state information indicating that alighting of the robot 100 is completed is not received from the robot control system 140 within a door close delay time, the elevator control system 130 may additionally extend the time of maintaining the door open state. In operation S1909, the robot 100 may alight from the elevator 120 in response to the alight instruction from the robot control system 140. Here, the robot control system 140 may transfer the state information indicating that the robot 100 is alighting to the elevator control system 130. When alighting of the robot 100 is completed in operation S1910, the robot control system 140 may verify an alight completion state of the robot 100 and may transfer a robot alight completion state to the elevator control system 130 in operation S1911. In response to receiving the state information indicating that alighting of the robot 100 is completed, the elevator control system 130 may transfer a door close instruction to the elevator 120 in operation S1912. In operation S1913, the elevator 120 may close the door in response to the door close instruction of the elevator control system 130. In operation S1914, state information indicating that alighting of the robot 100 is completed may be displayed through the internal user interface 1200. When the door of the elevator 120 closes, the elevator control system 130 may verify that the door is closed and, at the same time, transfer a move instruction of the elevator 120 in operation S1915. In operation S1916, in response to the move instruction from the elevator control system 130, the elevator 120 may vertically move.

According to some example embodiments, safety and efficiency for elevator use may be promoted in such a manner that an elevator control system may maintain control over opening and closing a door of an elevator when a robot boards or alights from the elevator. Also, according to some example embodiments, safety and efficiency for elevator use may be promoted by securing a boarding space of a robot through adjustment of a full capacity of an elevator when the robot boards the elevator and by minimizing a number of persons to board the elevator used by the robot.

The systems and/or apparatuses described herein may be implemented using hardware components, software components, and/or a combination thereof. For example, hardware components may include a processing device which may be implemented using one or more general-purpose or special purpose computers, such as, for example, a processor, a controller, an arithmetic logic unit (ALU), a digital signal processor, a microcomputer, a field programmable gate array (FPGA), a programmable logic unit (PLU), a microprocessor or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will appreciated that a processing device may include multiple processing elements and/or multiple types of processing elements. For example, a processing device may include multiple processors or a processor and a controller. In addition, different processing configurations are possible, such as parallel processors.

The software may include a computer program, a piece of code, an instruction, or some combination thereof, for independently or collectively instructing or configuring the processing device to operate as desired. Software and/or data may be embodied permanently or temporarily in any type of machine, component, physical or virtual equipment, computer storage medium or device, or in a propagated signal wave capable of providing instructions or data to or being interpreted by the processing device. The software also may be distributed over network coupled computer systems so that the software is stored and executed in a distributed fashion. In particular, the software and data may be stored by one or more computer readable storage mediums.

The methods according to the example embodiments may be recorded in non-transitory computer-readable media including program instructions to implement various operations embodied by a computer. The media may also include, alone or in combination with the program instructions, data files, data structures, and the like. The media and program instructions may be those specially designed and constructed for the purposes, or they may be of the kind well-known and available to those having skill in the computer software arts. Examples of non-transitory computer-readable media include magnetic media such as hard disks, floppy disks, and magnetic tape; optical media such as CD ROM disks and DVD; magneto-optical media such as floptical disks; and hardware devices that are specially to store and perform program instructions, such as read-only memory (ROM), random access memory (RAM), flash memory, and the like. Examples of other media may include recording media and storage media managed by Appstore that distributes applications or a site, a server, and the like that supplies and distributes other various types of software. Examples of program instructions include both machine code, such as produced by a compiler, and files containing higher level code that may be executed by the computer using an interpreter.

The foregoing description has been provided for purposes of illustration and description. It is not intended to be exhaustive or to limit the disclosure. Individual elements or features of a particular example embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. An elevator control method performed by a computer-implemented elevator control system comprising at least one processor configured to execute computer-readable instructions comprised in a memory, the elevator control method comprising:
receiving state information of a robot; and
controlling a door of an elevator which the robot is to board or alight from based on the state information.

2. The elevator control method of claim 1, wherein the controlling of the door of the elevator comprises:
maintaining a door open state of the elevator for boarding of the robot when the elevator arrives at a calling floor of the robot and the door of the elevator opens; and
transmitting a door close instruction to the elevator in response to receiving state information according to a boarding completion of the robot.

3. The elevator control method of claim 1 or claim 2, wherein the controlling of the door of the elevator comprises:
maintaining a door open state of the elevator for alighting of the robot when the elevator arrives at a target floor of the robot and the door of the elevator opens; and
transmitting a door close instruction to the elevator in response to receiving state information according to an alight completion of the robot.

4. The elevator control method of any of the previous claims, wherein the controlling of the door of the elevator comprises controlling a door open state of the elevator to be maintained for a preset period of time in response to boarding or alighting of the robot, and
wherein the controlling of the door of the elevator further comprises extending the door open state of the elevator when boarding or alighting of the robot is not completed within the preset period of time.

5. The elevator control method of any of the previous claims, further comprising:
adjusting a full capacity of the elevator taking into consideration a boarding space of the robot in the elevator.

6. The elevator control method of any of the previous claims, further comprising:
adjusting a full capacity that represents a standard for handling the fullness of the elevator, based on at least one of a number of robots aboard or planned to board the elevator, a required area, and a purpose of movement.

7. The elevator control method of any of the previous claims, further comprising:
controlling the state information of the robot associated with the elevator to be displayed through at least one of an internal user interface and an external user interface of the elevator.

8. The elevator control method of claim 7, wherein the controlling of the state information of the robot comprises controlling information about a floor from which the robot is planned to board the elevator and a floor to which the robot is to alight from the elevator through the internal user interface.

9. The elevator control method of claim 7 or claim 8, wherein the controlling of the state information of the robot comprises controlling information about a fullness state of the elevator by boarding or planned boarding of the robot to be displayed through the internal user interface.

10. The elevator control method of any of the previous claims, further comprising:
receiving a call from the robot control system;
assigning an elevator to be called to a floor indicated by the call; and
controlling the assigned elevator to move to the floor indicated by the call.

11. The elevator control method of claim 10, wherein the assigning of the elevator comprises selecting an elevator that provides an available area for the robot as the elevator to be called based on a congestion level according to an internal boarding situation of each elevator.

12. The elevator control method of claim 10 or claim 11, wherein the assigning of the elevator comprises selecting, from among a plurality of elevators, an elevator set as a dedicated elevator for boarding of the robot as the elevator to be called, and
wherein an indicator that indicates a robot-only elevator is displayed on at least one of an internal user interface and an external user interface of the elevator set as the dedicated elevator, and the at one of the internal user interface and the external user interface of the elevator does not provide information about whether the elevator is ascending or descending and a planned stopping of the elevator, activate a floor selection button and a door close button of the elevator, and adjust a lighting in the elevator when the elevator is set as the dedicated elevator.

13. The elevator control method of any of claims 10 to 12, further comprising:
receiving a cancellation for the assigned elevator;
assigning another elevator to be called to the floor indicated by the call; and
controlling the other elevator to move to the floor indicated by the call.

14. A computer-implemented elevator control system comprising:
at least one processor configured to execute computer-readable instructions stored in a memory,
wherein the at least one processor is configured to receive state information of a robot, and to control a door of an elevator which the robot is to board or alight from based on the state information.

15. The computer-implemented elevator control system of claim 14,
wherein the at least one processor is configured to control a door open state of the elevator to be maintained for a preset period of time in response to boarding or alighting of the robot;
wherein the at least one processor is configured to adjust a full capacity that represents a standard for handling the fullness of the elevator, based on at least one of a number of robots aboard or planned to board the elevator, a required area, and a purpose of movement; and
wherein the at least one processor is configured to assign an elevator that provides an available area for the robot as an elevator to be called to a floor indicated by the state information of the robot, based on a congestion level according to an internal boarding situation of each elevator, in response to receiving the state information of the robot from the robot control system.
